(19) Europäisches Patentamt

European Patent Office

Office européen des brevets

(11) Publication number: **0 264 918 B1**

(12) **EUROPEAN PATENT SPECIFICATION**

(45) Date of publication of patent specification: **28.08.91**  (51) Int. Cl.⁵: **G09G 3/36, H04N 3/12**

(21) Application number: **87115354.0**

(22) Date of filing: **20.10.87**

(54) **Image display apparatus.**

(30) Priority: **21.10.86 JP 160049/86 U**
**24.10.86 JP 163256/86 U**

(43) Date of publication of application:
**27.04.88 Bulletin 88/17**

(45) Publication of the grant of the patent:
**28.08.91 Bulletin 91/35**

(84) Designated Contracting States:
**DE FR GB**

(56) References cited:
**FR-A- 2 543 341**

**PATENT ABSTRACTS OF JAPAN, vol. 9, no.
277 (E-335)(2000), 6th November 1985; & JP -
A - 60 120 677**

**PATENT ABSTRACTS OF JAPAN, vol. 9, no.
277 (E-335)(2000), 6th November 1985; & JP -
A - 60 120 678**

**PATENT ABSTRACTS OF JAPAN, vol. 12, no.
158 (E-608), 13th May 1988; & JP - A - 62 271
570**

(73) Proprietor: **CASIO COMPUTER COMPANY
LIMITED
6-1, 2-chome, Nishi-Shinjuku
Shinjuku-ku Tokyo(JP)**

(72) Inventor: **Fuse, Takahiro Pat. Dept. D.D.
Hamura R&D Center
CASIO COMPUTER CO.LTD. 3-2-1, Sakae-cho
Hamura-machi Nishitama-gun Tokyo
190-11(JP)**
Inventor: **Yamagishi,Koji Pat. Dept. D.D.
Hamura R&D Center
CASIO COMPUTER CO.LTD. 3-2-1, Sakae-cho
Hamura-machi Nishitama-gun Tokyo
190-11(JP)**

(74) Representative: **Patentanwälte Grünecker,
Kinkeldey, Stockmair & Partner
Maximilianstrasse 58
W-8000 München 22(DE)**

## Description

The present invention relates to an image display apparatus as set forth in the preamble of claim 1. An image display apparatus of this kind is known from FR-A-2 543 341.

Known examples of a liquid crystal television set are the active matrix type and the multiplex type. Since the duty ratio of the active matrix type liquid crystal television set is substantially 100%, there is less degradation of image quality if the number of pixels is increased. On the other hand it is difficult to manufacture this type of television set, which results in a poor yield. Examples of the active matrix type liquid crystal television set are disclosed in US-A-4 393 380 and US-A-4 582 395.

In contrast, the multiplex type liquid crystal television set is relatively easy to manufacture and, thus, is well-suited for mass production. However, since this type of set uses an A/D converter, it is necessary that this converter can operate at high speed when the number of pixels is increased. Higher speed A/D converters entail greater cost and dissipate greater amounts of power. when the number of segment electrodes on a liquid crystal display panel is increased, not only is a faster A/D converter required, but a segment driver capable of operating at an increased data transmission frequency is also required, further increasing the costs.

The system disclosed in afore-mentioned FR-A-2 543 341 uses a single A/D converter. The document shows a display panel in which segment electrodes are alternately connected to two segment drivers. A single A/D converter is used, however, to distribute signals to the two segment drivers. Thus, the single A/D converter must be capable of operating at a relatively high speed. The arrangement shown therefore does not enable to attain a greater resolution with a liquid crystal display device without a corresponding increase in the required operating speed of an associated A/D converter.

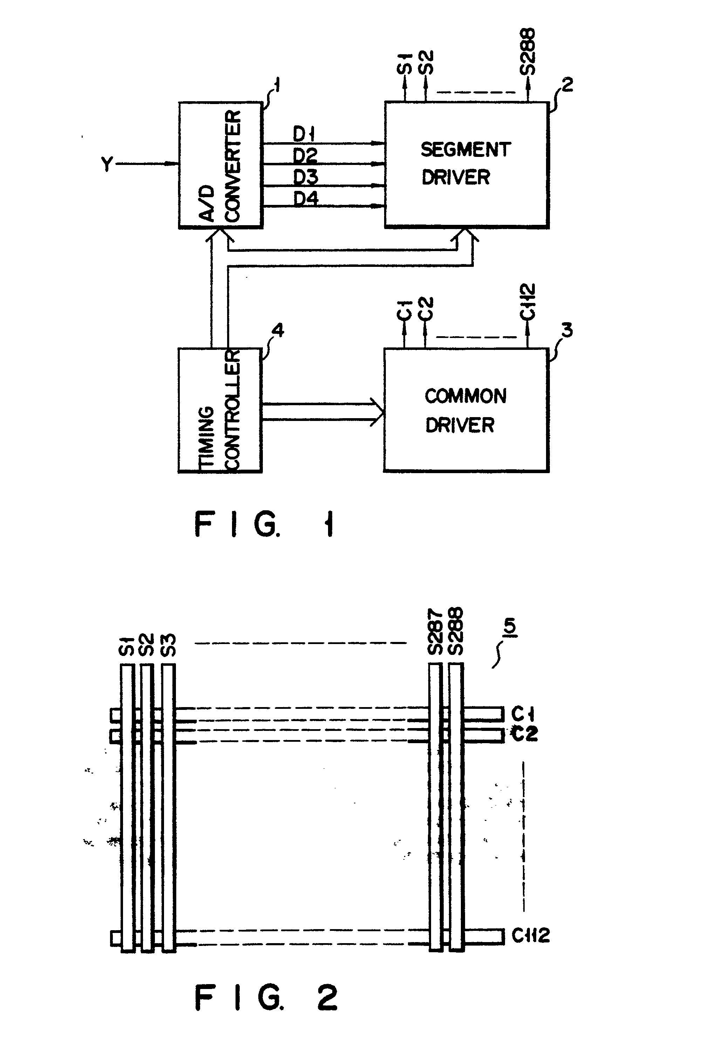

As is shown in figure 1 of the drawings, a conventional image display apparatus used in a multiplex type liquid crystal television set comprises A/D converter 1 for converting luminance signal Y, supplied from an image amplifier (not shown) into, for example, four-bit data D1 through D4, segment driver 2 for driving segment electrodes of liquid crystal display panel 5, shown in Fig. 2, in accordance with data D1 through D4, common driver 3 for sequentially driving the common electrodes of panel 5, and timing controller 4 for supplying a variety of timing signals to A/D converter 1 and drivers 2 and 3. In panel 5 shown in Fig. 2, all the segment electrodes are extracted from one side, e.g., the upper side of the panel.

Note that Fig. 1 shows a case wherein panel 5 consisting of 112 x 288 dots as shown in Fig. 2 is to be driven.

According to the above conventional method, assuming that an effective period of one scanning line is T (sec) and the number of horizontal pixels is n, a sampling frequency of A/D converter 1 and a data transfer frequency fs of driver 2 are represented by:

$$fs = n/T \ (Hz)$$

Therefore, if the number of pixels is increased to improve horizontal resolution, frequency fs is increased in proportion thereto. For this reason, the following problems arise:

(1) A/D converter 1, which can operate at high speed, and driver 2 are expensive and power-consuming.

(2) As the speed of A/D converter 1 is increased, the harmonic component of the digital signal has a high frequency, and thereby interferes with the television receiver.

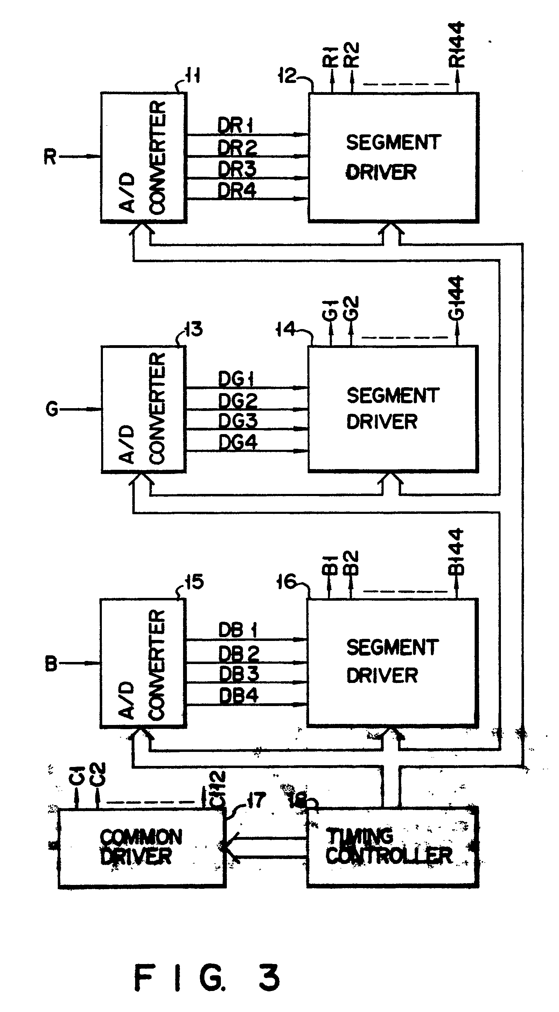

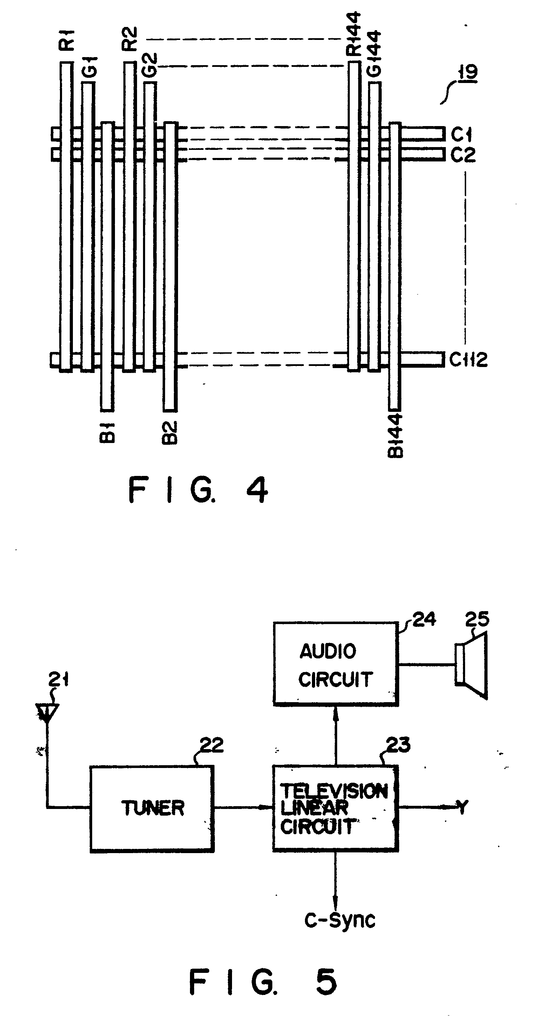

As shown in Fig. 3, an image display apparatus in a conventional liquid crystal color television set comprises A/D converters 11, 13, and 15 for respectively A/D-converting the primary color signals of R, G, and B supplied from a chroma circuit (not shown), segment drivers 12, 14, and 16 for driving the segment electrodes of color liquid crystal panel 19, shown in Fig. 4, in accordance with output signals from A/D converters 11, 13, and 15, respectively common driver 17 for sequentially driving the common electrodes of panel 19, and timing controller 18 for supplying a variety of timing signals to A/D converters 11, 13, and 15 and drivers 12, 14, 16, and 17. In panel 19, shown in Fig. 4, the segment electrodes of R (red) and G (green) are extracted from one side, e.g., the upper side of the panel, and the segment electrodes of B (blue) are extracted from the lower side thereof. Note that Fig. 3 shows a case wherein panel 19 consisting of 112 x 288 x 3 dots, as shown in Fig. 4, is to be driven.

In the above arrangement, signal R of red is A/D-converted into, e.g., four bit data DR1 through DR4, by A/D converter 11 and supplied to driver 12. Driver 12 outputs data of one scanning line, as a liquid crystal drive signal, to segment electrodes R1 through R144 of panel 19. Similarly, signals G and B of green and blue are A/D-converted by A/D converters 13 and 15, and then output from drivers 14 and 16 to segment electrodes G1 through G144 and B1 through B144 of panel 19, respectively. In this case, three pairs of A/D converters 11, 13, and 15 and drivers 12, 14, and 16 are controlled to operate at the same timing by controller 18. Common electrodes C1 through C112 of panel 19 are sequentially driven by driver 17. By the above series of operations, a color image is displayed on panel 19.

According to the above conventional method, since three A/D converters are required, this increases the manufacturing cost and power consumption of the apparatus. Moreover, since two arrays of segment electrodes (electrodes of R and G in Fig. 4) are extracted from panel 19 in the same direction, these electrodes are connected to the segment drivers in a staggered manner, resulting in poor productivity.

The present invention has been developed in consideration of the above situation and has as its object to provide an image display apparatus as set forth in the preamble of claim 1 in which an A/D converter can be constituted at low cost, its power consumption can be reduced, horizontal resolution can be improved without increasing the sampling frequency of the A/D converter and the data transfer frequency of the segment driver, and in the case of a color image display apparatus, the segment electrodes of the color liquid crystal panel can be easily connected to the segment driver.

This object is achieved by the characterizing features of claim 1. Preferred embodiments of the invention are subject matter of the dependent claims.

With the above arrangement, the sampling frequency of the A/D converter and the data transfer frequency of the segment driver can be reduced. Therefore, even if horizontal resolution is doubled, a conventional operation frequency can be used, the A/D converter can be constituted at low cost, and interference with respect to the television receiver, caused by digital data, can be prevented.

Moreover, as regards a color image display apparatus, the above object can be achieved by the use of only two A/D converters. Therefore, the cost and the power consumption of the A/D converters can be reduced. In addition, since the segment electrodes of the color liquid crystal panel are extracted upward and downward at every other position, this enables them to be more easily connected to the segment driver, thereby improving productivity.

This invention can be more fully understood from the following detailed description when taken in conjunction with the accompanying drawings, in which:

Fig. 1 is a block diagram of a circuit arrangement of a conventional image display apparatus;

Fig. 2 is a schematic view of an electrode structure of a conventional liquid crystal display panel;

Fig. 3 is a block diagram of a circuit arrangement of a conventional color image display apparatus;

Fig. 4 is a schematic view of an electrode structure of a conventional color liquid crystal display panel;

Fig. 5 is a block diagram of an arrangement of a television receiver according to a first embodiment of the present invention;

Fig. 6 is a block diagram of an arrangement of an image display apparatus according to the first embodiment of the present invention;

Fig. 7 is a schematic view of an electrode structure of a liquid crystal display panel of the first embodiment of the present invention;

Fig. 8 is a block diagram of an arrangement of a timing controller of Fig. 7;

Figs. 9A through 9K are timing charts for explaining timing signals, respectively;

Figs. 10A through 10D are timing charts for explaining the operation of the first embodiment of the present invention, respectively;

Fig. 11 is a block diagram of an arrangement of a color television receiver according to a second embodiment of the present invention;

Fig. 12 is a block diagram of an arrangement of a color image display apparatus according to the second embodiment of the present invention;

Fig. 13 is a schematic view of an electrode structure of a color liquid crystal display panel of the second embodiment;

Fig. 14 is a block diagram of an arrangement of a timing controller of Fig. 12;

Fig. 15 is a circuit diagram of an arrangement of an analog multiplexer of Fig. 12; and

Figs. 16A through 16M are timing charts for explaining an operation of the second embodiment of the present invention.

A first embodiment of the present invention will now be described below, with reference to the accompanying drawings. Fig. 5 is a block diagram of an arrangement of a television receiver. In Fig. 5, a radio wave received by antenna 21 is tuned by tuner 22, and luminance signal Y and composite sync signal C-Sync are output through television linear circuit 23 which includes a intermediate frequency amplifier, a video detector, a video amplifier, and the like. An audio signal is detected and amplified by audio circuit 24 and is generated from loudspeaker 25.

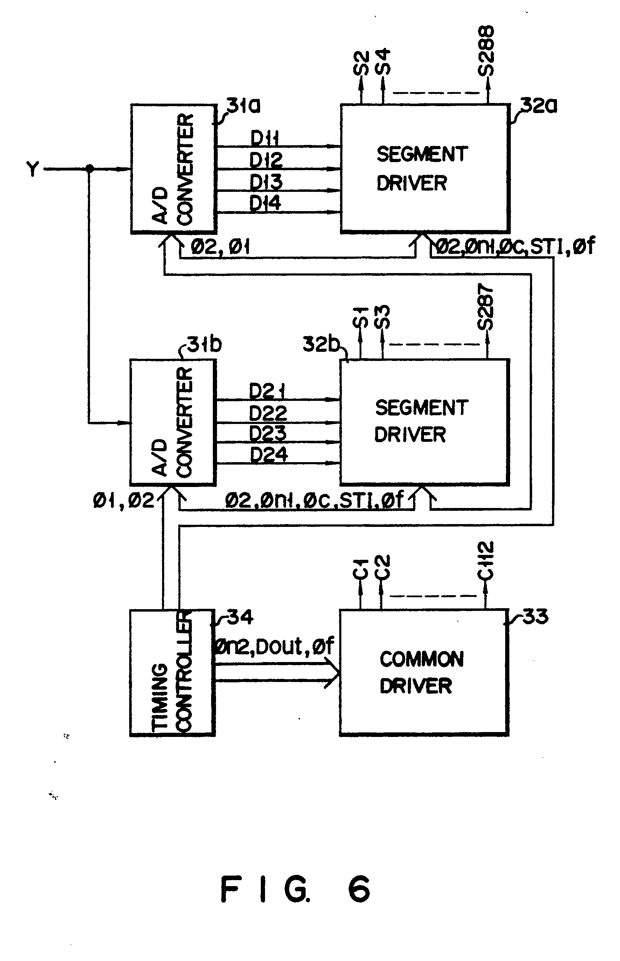

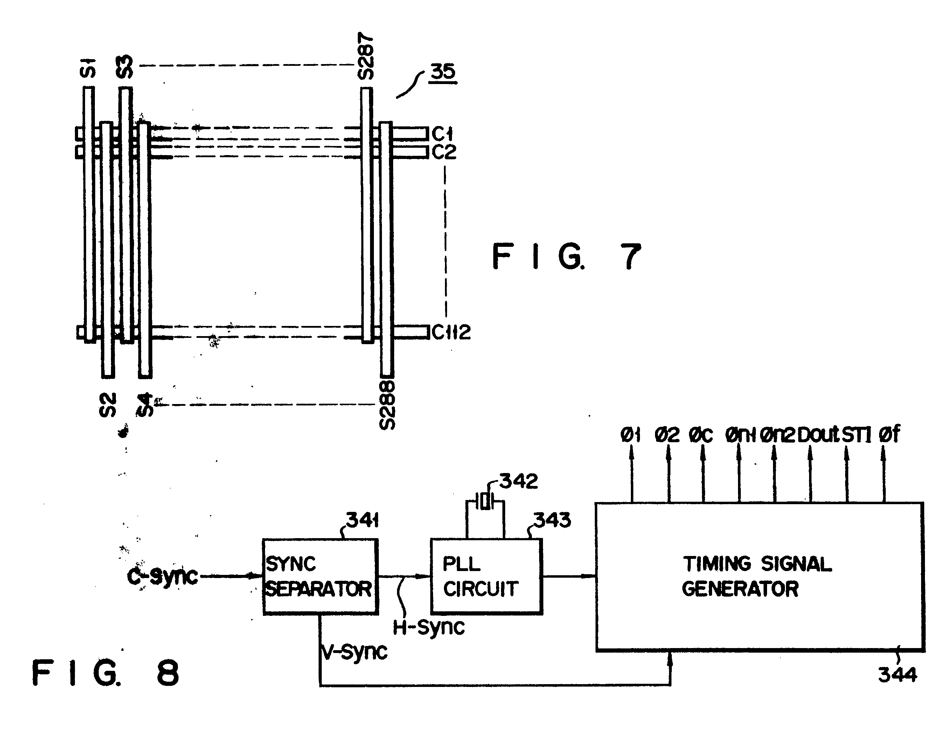

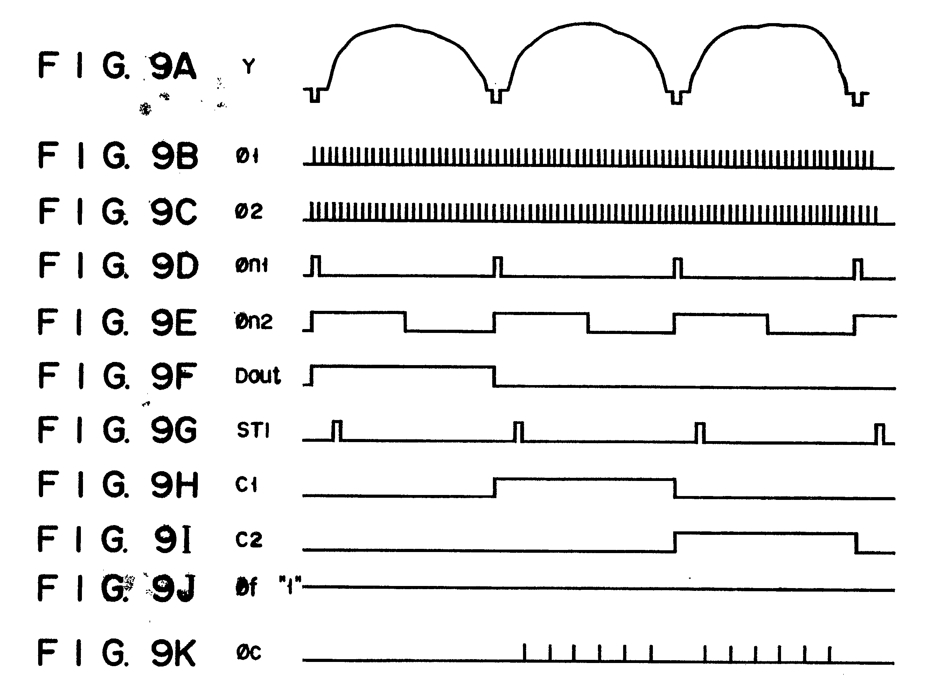

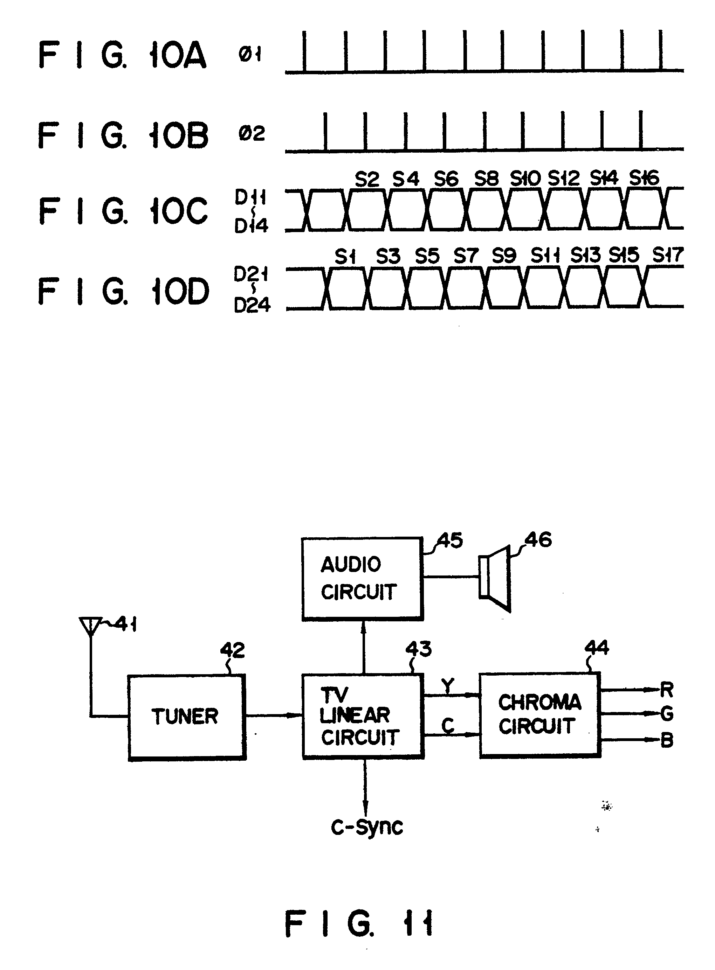

Fig. 6 is a block diagram of an image display apparatus for displaying a television image received by the above television receiver. As is shown in Fig. 6, the image display apparatus comprises: first A/D converter 31a for converting signal Y supplied from circuit 23 of Fig. 5 into, for example, four bit data D11, D12, D13, and D14; second A/D converter 31b for converting signal Y into four bit data D21, D22, D23, and D24, at a timing different from that of converter 31a; first segment driver 32a for driving even-numbered segment electrodes S2, S4,..., S288 of liquid crystal display panel 35 consisting of, for example, 112 x 288 dots, as is shown in Fig. 7, in accordance with data D11 through D14 from A/D converter 31a; second segment driver 32b for driving odd-numbered segment electrodes S1, S3,..., S287 of panel 35, in accordance with data D21 through D24 from A/D converter 31b; common driver 33 for sequentially driving common electrodes C1 through C112 of panel 35; and timing controller 34 for controlling the operation timings of these circuits. Controller 34 supplies clock pulse $\phi$1, shown in Figs. 9B and 10A, to A/D converter 31a, and supplies clock pulse $\phi$2, whose phase is shifted 180° from that of pulse $\phi$1, to A/D converter 31b, respectively, as sampling clocks. As a result, data D11 through D14 and data D21 through D24 are output having a 180° phase difference, i.e., output alternately from A/D converters 31a and 31b, respectively.

Panel 35 shown in Fig. 7 has electrodes consisting of, for example, 112 x 288 dots. In this case, odd-numbered electrodes S1, S3,..., S287 are extracted from the upper side of the panel and even-numbered electrodes S2, S4,..., S288 are extracted from the lower side thereof.

An arrangement of controller 34 will now be described below, with reference to Fig. 8. Signal C-Sync output from circuit 23 is input to sync separator 341 and therein is separated into vertical sync signal V-Sync and horizontal sync signal H-Sync. Signal H-Sync is input to PLL circuit 343, which includes oscillator 342. PLL circuit 343 locks a phase of an oscillation frequency signal from oscillator 342 to that of signal H-Sync, and supplies a stable frequency signal to timing signal generator 344. Generator 344 divides the input frequency signal, as required, and generates and outputs various timing signals.

These timing signals will now be described in detail, with reference to Figs. 9A through 9K. Pulses $\phi$1 and $\phi$2, shown in Figs. 9B and 9C, respectively, are clock pulses whose phases are shifted 180° from each other. Pulse $\phi$2 is supplied to A/D converter 31a, as a sampling clock, and pulse $\phi$1 is supplied thereto, as an output clock, respectively. Pulse $\phi$1 is supplied to A/D converter 31b, as a sampling clock, and pulse $\phi$2 is supplied thereto, as an output clock, respectively. Figs. 9B and 9C show only small numbers of pulses $\phi$1 and $\phi$2 produced during a period of one H-sync signal. However, pulses $\phi$1 and $\phi$2 are actually output by the number half that of a sampling number during the period of one H-sync signal (144 in this embodiment). Pulse $\phi$2 is also supplied to drivers 32a and 32b. STI represents a shift data signal supplied to drivers 32a and 32b. Data D11 through D14 and data D21 through D24 are fetched while signal STI is shifted by pulse $\phi$2. After digital data of one line (1 H) is fetched, the data is latched in buffers (not shown) of drivers 32a and 32b by clock pulse $\phi$n1, shown in Fig. 9D. Then, gradation signals are generated by gradation signal generation clock pulse $\phi$c, shown in Fig. 9K. The gradation signals are supplied from driver 32a to electrodes S2 through S288, and supplied from driver 32b to electrodes S1 through S287, respectively. Arrangements and operations of drivers 32a and 32b are described in detail in U.S. Serial No. 907,679. Dout, shown in Fig. 9F, represents a shift data signal to be supplied to driver 33. Signals Dout are output one by one in units of fields, sequentially shifted by timing signal $\phi$n2, shown in Fig. 9E, and then supplied to electrodes C1 through C112. Symbol $\phi$f, shown in Fig. 9F, represents a frame signal for AC-driving a liquid crystal. Signal $\phi$f is inverted in units of fields. That is, signal $\phi$f is at level "1" in a field shown in Fig. 9J and goes to level "0" in the next field. The level of a signal to be supplied to the segment and common electrodes is inverted in accordance with signal $\phi$f, thereby AC-driving the liquid crystal.

In the above arrangement, as shown in Figs. 10A through 10D, when signal Y is supplied from circuit 23, A/D converter 31a samples signal Y by pulse $\phi$2. A/D converter 31a converts signal Y into data D11 through D14, and outputs them to driver 32a by pulse $\phi$1. A/D converter 31b samples signal Y by pulse $\phi$1, converts signal Y into data D21 to D24, and outputs them to driver 32b by pulse $\phi$2, as shown in Fig. 10. Therefore, driver 32a sequentially reads data D11 through D14 supplied from A/D converter 31a. When data of one line (as a data amount, a 1/2 line) are supplied, driver 32a drives even-numbered electrodes S2, S4,..., S288 of panel 35 in accordance with data contents. Driver 32b sequentially reads data D21 through D24 supplied from A/D converter 31b in a phase shifted 180° from that of driver 32a. When data of one line (as a data amount, a 1/2 line) are supplied, driver 32b drives odd-numbered electrode S1, S3,..., S287 of panel 35 in accordance with data contents. As described above, the odd-numbered electrodes whose terminals are extracted upward from panel 35 and the even-numbered electrodes whose terminals are extracted downward therefrom are simultaneously driven by drivers 32a and 32b. Therefore, all of electrodes S1, S2,..., S288 of one line can be driven at the same time. Driver 33 starts scanning of the common electrodes in synchronism with signal Dout synchronized with the vertical sync signal and sequentially drives electrodes C1 through C112 selectively at predetermined timings. By driving the electrodes by drivers 32a, 32b, and 33, an image corresponding to signal Y is displayed on panel 35.

As described above, since A/D converters 31a and 31b alternately A/D-convert the video signals supplied from the video amplifier and output them to drivers 32a and 32b, an operation frequency can be reduced half that required when video signals are sequentially A/D-converted by a single A/D converter.

Note that in the above embodiment, driver 32a drives the even-numbered segment electrodes of panel 35, and driver 32b drives the odd-numbered segment electrodes thereof, respectively. However, the odd-numbered electrodes may be driven by driver 32a, and the even-numbered electrodes may be driven by driver 32b.

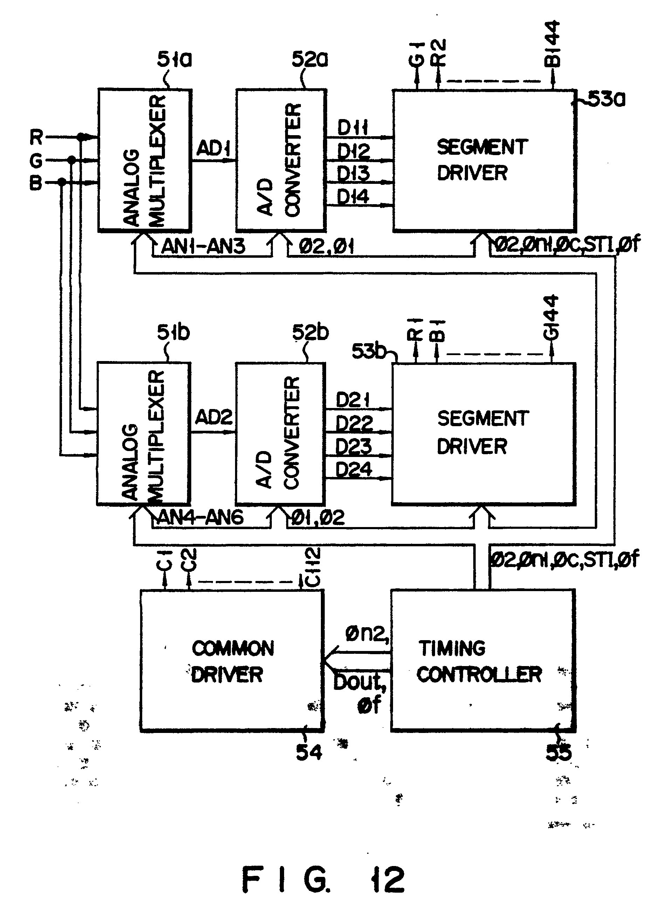

A second embodiment of the present invention will be described below. Fig. 11 is a block diagram of a receiver of a color television circuit. In Fig. 11, a radio wave received by antenna 41 is tuned by tuner 42, and luminance signal Y, color television signal C, and composite sync signal C-Sync are output through television linear circuit 43 which includes an intermediate frequency amplifier, a video detector, and a video amplifier. Signals Y and C are input to chroma circuit 44, and primary color signals R, G, and B are output therefrom. An audio signal is detected and amplified by audio circuit 45 which includes an audio detector, an audio amplifier, and the like, and a sound is generated from loudspeaker 46.

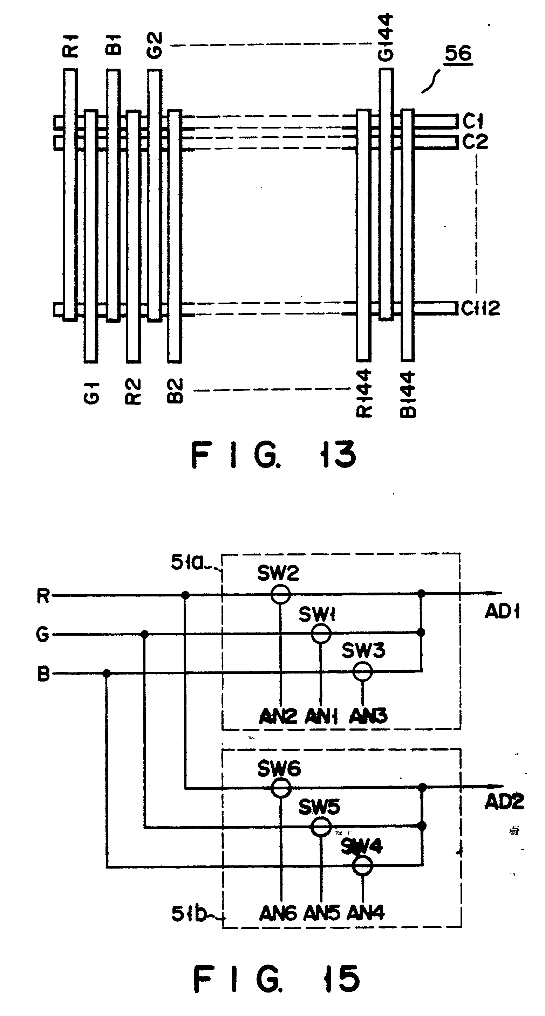

Fig. 12 is a block diagram of an image display apparatus for displaying a television image received by the above color television receiver. As shown in Fig. 12, signals R, G, and B supplied from circuit 44 are input to first analog multiplexer 51a and second analog multiplexer 51b. Multiplexer 51a time-divisionally mixes signals R, G, and B in a predetermined order and outputs mixed signal AD1 to first A/D converter 52a. Multiplexer 51b time-divisionally mixes signals R, G, and B at a timing different from that of multiplexer 51a and outputs mixed signal AD2 to second A/D converter 52b. A/D converters 52a and 52b convert signals AD1 and AD2 into, e.g, four bit data D11 through D14 and D21 through D24 at different timings and output them to first and second segment drivers 53a and 53b, respectively. Driver 53a drives even-numbered segment electrodes G1, R2,..., B144 extending downward from color liquid crystal panel 56 of, e.g., 112 x 144 x 3 dots as shown in Fig. 13 in accordance with data D11 through D14 from A/D converter 52a. Driver 53b drives odd-numbered segment electrodes R1, B1,..., G144 extending upward from panel 56 in accordance with data D21 through D24 from A/D converter 52b. As described above, panel 56 shown in Fig. 13 has electrodes of, e.g., 112 x 144 x 3 dots. In panel 56, odd-numbered electrodes R1, B1,..., G144 are extracted upward, and even-numbered electrodes G1, R2,..., B144 are extracted downward.

Common electrodes C1 through C112 of panel 56 are sequentially and selectively driven by common driver 54. Operation timings between multiplexers 51a and 51b, A/D converters 52a and 52b, and drivers 53a, 53b, and 54 are controlled by timing controller 55.

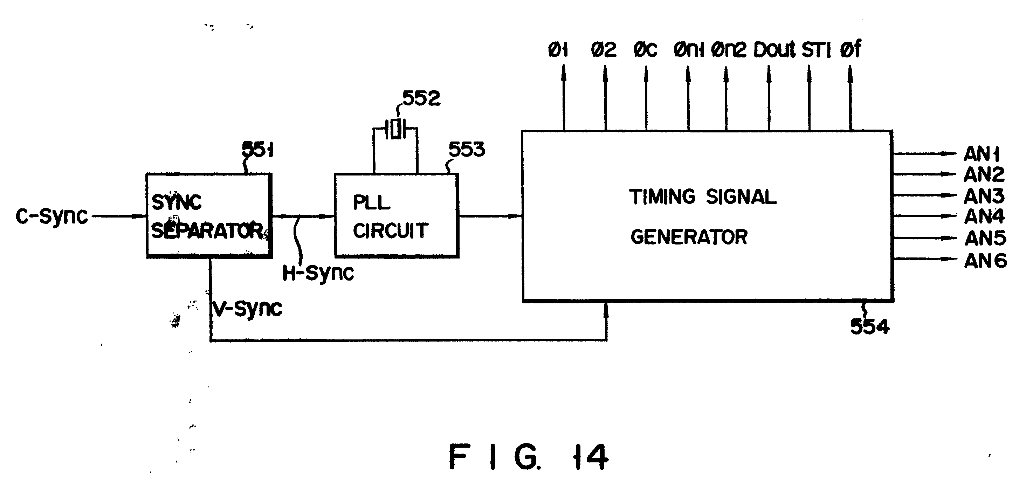

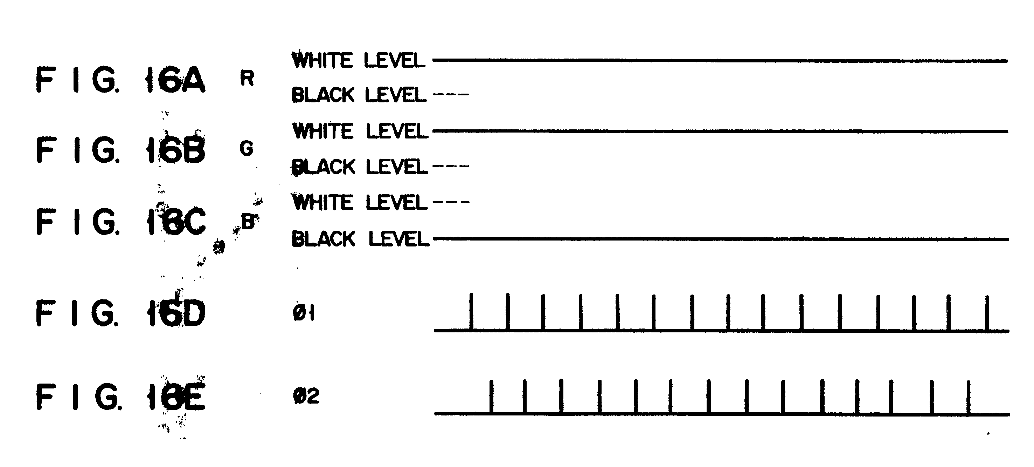

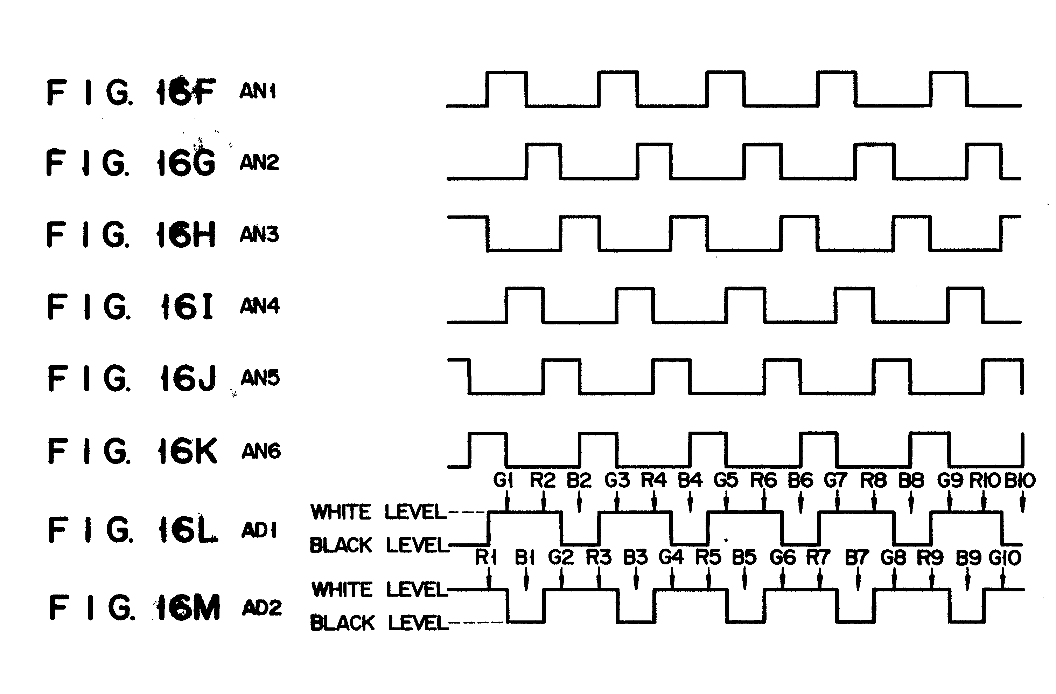

An arrangement of controller 55 is shown in Fig. 14. A detailed description of controller 55 will be omitted since it has substantially the same arrangement as that of timing controller 34 of the first embodiment shown in Fig. 8 except that timing signal generator 554 generates switch signals AN1 through AN6. Signals AN1 through AN6 are supplied to multiplexers 51a and 51b, and their timings are shown in Figs. 16D through 16I.

Multiplexers 51a and 51b will be described in detail with reference to Fig. 15. Multiplexer 51a consists of analog switches SW1, SW2, and SW3. Signals G, R, and B are input to switches SW1, SW2, and SW3, respectively. Switches SW1 through SW3 are controlled by signals AN1 through AN3, respectively. Signals received from switches SW1 through SW3 are mixed with each other and supplied to A/D converter 52a as mixed signal AD1. Signals AN1 through AN3 are sequentially output from controller 55 with a phase difference of 120° as shown in Figs. 16D through 16F.

Multiplexer 51b consists of analog switches SW4, SW5, and SW6. Signals B, G, and R are input to switches SW4, SW5, and SW6, respectively. Switches SW4 through SW6 are controlled by signals AN4 through AN6, respectively. Signals received from switches SW4 through SW6 are mixed with each other and supplied to A/D converter 52b as mixed signal AD2. Signals AN4 through AN6 are output from controller 55 with a phase difference of 120° with each other and a delay of 60° with respect to signals AN1 through AN3, as shown in Figs. 16G through 16I.

An operation of the second embodiment will be described below. When signals R, G, and B are supplied from circuit 44, multiplexers 51a and 51b time-divisionally mix signals R, G, and B and output mixed signals AD1 and AD2 to A/D converters 52a and 52b, respectively. That is, when switches SW1 through SW3 are sequentially selected and turned on by signals AN1 through AN3, multiplexer 51a selectively mixes the color signals in the order of G1 → R2 → B2 → G3... as shown in Fig. 16J and outputs signal AD1 to A/D converter 52a. A/D converter 52a samples signal AD1, converts it into four bit data D11 through D14, and outputs them to driver 53a. Driver 53a sequentially reads data D11 through D14 supplied from A/D converter 52a. When data of one line are transferred, driver 53a drives even-numbered electrodes G1, R2, B2,..., R144, and B144 extending downward from panel 56 in accordance with data contents.

When switches SW4 through SW6 are sequentially selected and turned on by signals AN4 through AN6, multiplexer 51b selectively mixes the color signals in the order of R1 → B1 → G2 → R3... as shown in Fig. 16K and outputs signal AD2 to A/D converter 52b. A/D converter 52b samples signal AD2, converts it into four bit data D21 through D24, and outputs them to driver 53b. Driver 53b sequentially reads data D21 through D24 supplied from A/D converter 52b. When data of one line are transferred, driver 53b drives odd-numbered electrodes R1, B1, G2,..., and G144 extending upward from panel 56 in accordance with data contents.

As described above, the odd-numbered electrodes extracted upward from panel 56 and the even-numbered electrodes extracted downward therefrom are simultaneously driven by drivers 53a and 53b. Therefore, all of electrodes R1, G1, B1, R2, G2, B3,..., R144, G144, and B144 of one line can be driven at the same time. Driver 54 starts scanning the common electrodes in synchronism with the vertical sync signal and sequentially drives electrodes C1 through C112 selectively at predetermined timings. By driving the electrodes by drivers 53a, 53b, and 54, a color image corresponding to signals R, G, and B is displayed on panel 56.

## Claims

1. An image display apparatus including a liquid crystal display panel (35; 56) in which segment electrodes and common electrodes are arranged in matrix fashion, and which is obtained by extracting the odd-numbered segment electrodes and the even-numbered segment electrodes from different sides, which oppose each other; A/D converting means (31a, 31b; 52a, 52b) for A/D converting a video signal; segment drivers (32a, 32b; 53a, 53b) for driving the segment electrodes, in accordance with an output signal from said A/D converting means; and a common driver (33; 54) for driving the common electrodes,
**characterized in that:**

said A/D converting means comprises a first A/D converter (31a; 52a) for converting the video signal into digital data at a certain phase timing, and a second A/D converter (31b; 52b) for converting the video signal into digital data at a timing having a phase different from that of said first A/D converter (31a, 52a), said first and second A/D converters (31a; 52a, 31b; 52b) each being arranged to operate at a sampling frequency (fs) substantially equal to n/2T, wherein n is the number of pixels in one horizontal line and T is the effective period of one scanning line;

and in that said segment drivers comprises a first segment driver (32a; 53a) for driving the odd-numbered segment electrodes (51, 53...) of said liquid crystal display panel (35; 56) in accordance with an output signal from said first A/D converter (31a; 52a); and a second segment driver (32b; 53b) for driving the even-numbered segment electrodes (52, 54 ...) of said liquid crystal display panel (35; 56) in accordance with an output signal from said second A/D converter (31b; 52b).

2. An image display apparatus according to claim 1, wherein said liquid crystal diplay panel (56) is a color liquid crystal display panel;

there are provided first and second analog multiplexers (51a,51b) for time-divisionally mixing primary color signals of Red (R), Green (G), and Blue (B) to be displayed on said color liquid crystal panel (56) in an order corresponding to the segment electrodes extracted from the upper side and the lower side of said color liquid crystal display panel (56), respectively;

and each segment electrode is always associated with only one of said R, G and B primary color signals.

3. An apparatus according to claim 2, wherein each said segment electrodes are arranged in a sequence of any combination corresponding to R, G, B.

4. An apparatus according to claim 1 or 2, wherein said odd-numbered segment electrodes ($S_1$, $S_3$ ....) and said even-numbered segment electrodes ($S_2$, $S_4$ ...) are arranged to extend in opposite directions.

5. An apparatus according to claim 2, wherein is further provided a television circuit (23), and in that said first and said second A/D converters (52a,52b) are arranged to A/D convert primary color signals supplied from said television circuit (23).

6. An apparatus according to claim 1, wherein is further provided a television circuit (23), and in that said first and second A/D converters (31a;52a,31b;52b) are arranged to A/D convert a luminance signal supplied from said television circuit (23).

7. An apparatus according to claim 2, wherein said first analog multiplexer (51a) includes means for alternately selecting two signals from among R (Red) , G (Green), and B (Blue) signals for a single pixel, and selecting the remaining one of the R, G, and B signals for a different single pixel.

8. An apparatus according to claim 2, wherein said second analog multiplexer (51b) includes means for alternately selecting two signals from among R (Red), G (Green), and B (Blue) signals for a single pixel, and selecting the remaining one of the R, G, and B signals for a different single pixel.

9. An apparatus according to claim 2, characterized in that said first analog multiplexer (51a) is arranged so as to alternately perform selection of two from among R (Red), G (Green), and B (Blue) signals for a single pixel, and selection of one from among R, G and B signals for a single pixel, and said second analog multiplexer (51b) is arranged so as to alternately perform selection of two from among R (Red), G (Green), and B (Blue) signals for a single pixel and selection of one from among R, G and B signals for a single pixel, said first analog multiplexer (51a) selects two from among R, G, and B signals for a single pixel shile the second analog multiplexer (51b) selects the remaining one of R, B and B signals for the single pixel, and said first analog multiplexer (51a) selects one from among R, G and B signals for a single pixel while said second analog multiplexer (51b) selects the remaining two from among R, G and B signals for the single pixel.

10. An apparatus according to claim 2, wherein said first A/D converter (31a;52a) alternately performs A/D conversion of two from among R (Red), G (Green), and B (Blue) signals for a single pixel, and A/D conversion of the remaining one of R, G and B signals for the single pixel.

11. An apparatus according to claim 2, wherein said second A/D converter (31b; 52b) alternately performs A/D conversion of two from among R (Red), G (Green), and B (Blue), signals for a single pixel, and A/D conversion of the remaining one of R, G and B signals for the single pixel.

12. An apparatus according to claim 2, wherein said first A/D converter (31a,52a) is arranged so as to alternately perform A/D conversion of two from among R (Red), G (Green), and B (Blue) signals for a single pixel, and A/D conversion of the remaining one of R, G, and B signals for the single pixel, said second A/D converter (31b,52b) being arranged so as to alternately perform A/D conversion of two from among R (Red), G (Green), and B (Blue) signals for a single pixel, and A/D conversion of the remaining one of R, G, and B signals for the single pixel, said first A/D converter (31a,52a) A/D converting two from among R, G, and B signals for a single pixel while the second A/D converter (31b,52b) A/D converts the remaining one of R, G, and B signals for the single pixel, and said first A/D converter (31a,52a) A/D converting one from among R, G, and B signals for a single pixel while said second A/D converter (31b,52b) converts the remaining two R, G and B signals for the single pixel.

**Revendications**

1. Dispositif de visualisation d'image incluant un panneau de visualisation à cristaux liquides (35;36) dans lequel des électrodes de segment et des électrodes communes sont disposées sous forme matricielle, et qui est obtenu en extrayant les électrodes de segment de numéros impairs et les électrodes de segment de numéros pairs de côtés différents, opposés entre eux; un moyen convertisseur A/N (31a,31b;52a,52b) pour convertir d'analogique en numérique un signal vidéo; des circuits de commande de segment (32a,32b; 53a, 53b) pour commander les électrodes de segment, conformément à un signal de sortie dudit moyen convertisseur A/N; et un circuit de commande commun (33;54) pour commander les électrodes communes, caractérisé en ce que:

ledit moyen convertisseur A/N comprend un premier convertisseur A/N (31a;52a) pour convertir le signal vidéo en données numériques à une certaine phase de synchronisation, et un deuxième convertisseur A/N (31b;52b) pour convertir le signal vidéo en données numériques à un temps de synchronisation ayant une phase différente de celle dudit premier convertisseur A/N (31a;52a), lesdits premier et deuxième convertisseurs A/N (31a;52a,31b;52b) étant agencés chacun pour fonctionner une fréquence d'échantillonnage (fs) effectivement égale à n/2T, où n est le nombre d'éléments d'image ou pixels sur une ligne horizontale et T est la période effective d'une ligne de balayage;

et en ce que lesdits circuits de commande de segment comprennent un premier circuit de commande de segment (32a;53a) pour commander les électrodes de segment de numéros impairs (51,53,...) dudit panneau de visualisation à cristaux liquides (35;56) conformément à un signal de sortie dudit premier convertisseur A/N(31a;52a); et un deuxième circuit de commande de segment (32b;53b) pour commander les électrodes de segment de numéros pairs (52,54,...) dudit panneau de visualisation à cristaux liquides (35;56) conformément à un signal de sortie dudit deuxième convertisseur A/N (31b;52b).

2. Dispositif de visualisation d'image selon la revendication 1, dans lequel ledit panneau de visualisation à cristaux liquides (56) est un panneau de visualisation à cristaux liquides en couleurs;des premier et deuxième multiplexeurs analogiques (51a,51b) sont prévus pour mélanger les signaux de couleur fondamentale,par division du temps,du Rouge (R), du Vert (G) et du Bleu (B) à visualiser sur ledit panneau à cristaux liquides en couleurs (56) dans un ordre correspondant aux électrodes de segment extraites du côté supérieur et du côté inférieur dudit panneau de visualisation à cristaux liquides en couleurs (56), respectivement; et chaque électrode de segment est toujours associée à un seul desdits signaux de couleur fondamentale R, G et B.

3. Dispositif selon la revendication 2, dans lequel chacune desdites électrodes de segment est disposée dans une série de n'importe quelle combinaison correspondant à R, G, B.

4. Dispositif selon l'une quelconque des revendications 1 et 2, dans lequel lesdites électrodes de segment de numéros impairs S1,S3,...)et lesdites électrodes de segment de numéros pairs (S2,S4,...) sont disposées pour s'étendre dans des directions opposées.

5. Dispositif selon la revendication 2, dans lequel un circuit de télévision (23) est en outre prévu, et en ce que lesdits premier et deuxième convertisseurs A/N (52a,52b) sont agencés pour convertir d'analogique en numérique les signaux de couleur fondamentale fournis par ledit circuit de télévision (23).

6. Dispositif selon la revendication 1, dans lequel un circuit de télévision (23) est en outre prévu, et en ce que lesdits premier et deuxième convertisseurs A/N (31a;52a,31b;52b) sont agencés pour convertir d'analogique en numérique un signal de luminance fourni par ledit circuit de télévision (23).

7. Dispositif selon la revendication 2, dans lequel ledit premier multiplexeur analogique (51a) comprend un moyen pour sélectionner alternativement deux signaux parmi les signaux R (Rouge), G(Vert), et B (Bleu) pour un seul pixel, et pour sélectionner l'autre des signaux R, G et B pour un seul pixel différent.

8. Dispositif selon la revendication 2, dans lequel ledit deuxième multiplexeur analogique (51b) comprend un moyen pour sélectionner alternativement deux signaux parmi les signaux R-(Rouge), G (Vert) et B (Bleu) pour un seul pixel, et pour sélectionner l'autre des signaux R, G et B pour un seul pixel différent.

9. Dispositif selon la revendication 2, caractérisé en ce que ledit premier multiplexeur analogique (51a) est agencé de manière à exécuter alternativement la sélection de deux des signaux R (Rouge), G (Vert), et B (Bleu) pour un seul pixel, et la sélection d'un des signaux R, G et B pour un seul pixel, et ledit deuxième multiplexeur analogique (51b) est agencé de manière à exécuter alternativement la sélection de deux des signaux R (Rouge), G (Vert), et B (Bleu) pour un seul pixel et la sélection d'un des signaux R, G et B pour un seul pixel, ledit premier multiplexeur analogique (51a) sélectionne deux des signaux R, G et B pour un seul pixel alors que le deuxième multiplexeur analogique (51b) sélectionne l'autre des signaux R, G et B pour le seul pixel, et ledit premier multiplexeur analogique (51a) sélectionne un des signaux R, G et B pour un seul pixel alors que ledit deuxième multiplexeur analogique (51b) sélectionne les deux autres des signaux R,G et B pour le seul pixel.

10. Dispositif selon la revendication 2, dans lequel ledit premier convertisseur A/N (31a;52a) exécute alternativement la conversion d'analogique en numérique de deux des signaux R (Rouge), G (Vert), et B (Bleu) pour un seul pixel, et la conversion d'analogique en numérique de l'autre des signaux R, G et B pour le seul pixel.

11. Dispositif selon la revendication 2, dans lequel ledit deuxième convertisseur A/N (31b;52b) exécute alternativement la conversion d'analogique en numérique de deux des signaux R (Rouge), G (Vert) et B (Bleu) pour un seul pixel, et la conversion d'analogique en numérique de l'autre des signaux R, G et B pour le seul pixel.

12. Dispositif selon la revendication 2,dans lequel ledit premier convertisseur A/N (31a;52a) est agencé de manière à exécuter alternativement la conversion d'analogique en numérique de deux des signaux R (Rouge), G (Vert), et B (Bleu) pour un seul pixel, et la conversion d'analogique en numérique de l'autre des signaux R, G et B pour le seul pixel, ledit deuxième convertisseur A/N (31b;52b) étant agencé de manière à exécuter alternativement la conversion d'analogique en numérique de deux des signaux R (Rouge), G (Vert), et B (Bleu) pour un seul pixel, et la conversion d'analogique en numérique de l'autre des signaux R, G et B pour le seul pixel, ledit premier convertisseur A/N (31a; 52a) convertissant d'analogique en numérique deux des signaux R, G et B pour un seul pixel alors que le deuxième convertisseur A/N (31b; 52b) convertit d'analogique en numérique l'autre des signaux R, G et B pour le seul pixel, et ledit premier convertisseur A/N (31a;52a) convertissant d'analogique en numérique un des signaux R, G et B pour un seul pixel alors que ledit deuxième convertisseur A/N (31b;52b) convertit les deux autres des signaux R, G et B pour le seul pixel.

**Patentansprüche**

1. Bildanzeigevorrichtung, ein Flüssigkristall-Anzeigefeld (35; 56) enthaltend, bei dem Segmentelektroden und gemeinsame Elektroden in Matrixart angeordnet sind und das man erhält durch Extrahieren der ungeradzahligen Segmentelektroden und der geradzahligen Segmentelektroden aus verschiedenen Seiten, die sich gegenüberstehen; A/D-Wandlereinrichtung (31a, 31b; 52a, 52b) zum A/D-wandeln eines Videosignals; Segmenttreiber (32a, 32b; 53a, 53b) für den Betrieb der Segmentelektroden, in Übereinstimmung mit einem Ausgangssignal der A/D-Wandlervorrichtung; und ein gemeinsamer Treiber (33, 54) für den Betrieb der gemeinsame Elektroden, **dadurch gekennzeichnet daß**,

die A/D-Wandlereinrichtung einen ersten A/D-Wandler zum Umwandeln des Videosignals in digitale Daten bei einem bestimmten Phasenzeitpunkt und einen zweiten A/D-Wandler (31b; 52b) umfaßt, zum Umwandeln des Videosignals in digitale Daten bei einem Zeitpunkt, bei dem sich die Phase von der des ersten A/D-Wandlers (31a; 52a) unterscheidet, wobei jeder der ersten und zweiten A/D-Wandler (31a; 52a, 31b; 52b) derart eingerichtet ist, daß sie bei einer Abtastfrequenz (fs), die im wesentlichen n/2T entspricht arbeitet, wobei n die Anzahl der Bildpunkte in einer horizontalen Zeile darstellt und T die wirksame Periode einer Abtastzeile ist;

und daß die Segmenttreiber einen ersten Segmenttreiber (32a; 53a) umfassen für den Betrieb der ungeradzahligen Segmentelektroden (51, 53 ...) des Flüssigkeits-Anzeigefeldes (35; 56) in Übereinstimmung mit einem Ausgangssignal des ersten A/D-Wandlers (31a; 52a); und einen zweiten Segmenttreiber (32b; 53b) für den Betrieb der geradzahligen Segmentelektroden (52, 54 ...) des Flüssigkristall-Anzeigefelds (35; 56) in Übereinstimmung mit einem Ausgangssignal des zweiten A/D-Wandlers (31b; 52b).

2. Bildanzeigevorrichtung nach Anspruch 1, wobei das Flüssigkristall-Anzeigefeld (56) ein farbiges Flüssigkristall-Anzeigefeld ist;

es sind erste und zweite Analogmultiplexer (51a, 51b) für das Zeitteilmischen von Primärfarbsignalen von Rot (R), Grün (G) und Blau (B) vorgesehen, welche auf dem farbigen Flüssigkristallfeld (56) in einer Reihenfolge entsprechend der Segmentelektroden, die aus der jeweils oberen und der unteren Seite des farbigen Flüssigkristall-Anzeigefelds (56) extrahiert werden, angezeigt werden sollen;

und jede Segmentelektrode wird immer mit nur einer der R-, G- und B- Primärfarbsignale in Verbindung gebracht.

3. Eine Vorrichtung nach Anspruch 2, bei der jede Segmentelektrode in einer Reihenfolge einer der Kombinationen entsprechend R, G, B angeordnet ist.

4. Eine Vorrichtung nach Anspruch 1 oder 2, bei der die ungeradzahlige Segmentelektroden ($S_1$, $S_3$,...) und die geradzahligen Segmentelektroden ($S_2$, $S_4$,...) so angeordnet sind, daß sie sich in entgegengesetzte Richtungen erstrecken.

5. Eine Vorrichtung nach Anspruch 2, bei der weiterhin eine Fernsehschaltung (23) vorgesehen ist, und bei der die ersten und zweiten A/D-Wandler (52a, 52b) so angeordnet sind, daß sie Primärfarbsignale, die von der Fernsehschaltung (23) abgegeben werden A/D-wandeln.

6. Eine Vorrichtung nach Anspruch 1 bei der weiterhin eine Fernsehschaltung (23) vorgesehen ist, und bei der die ersten und zweiten A/D-Wandler (31a; 52a, 31b; 52b) dazu eingerichtet sind, ein Helligkeitssignal, das von der Fernsehschaltung (23) abgegeben wird, A/D zu wandeln.

7. Eine Vorrichtung nach Anspruch 2, bei der der erste Analogmultiplexer (51a) Einrichtungen für das abwechselnde Wählen von zwei Signalen aus R (Rot), G (Grün) und B (Blau) für einen einzelnen Bildpunkt enthält, und für das Wählen des übrigbleibenden der R-, G- und B-Signale für einen anderen einzelnen Bildpunkt.

8. Eine Vorrichtung nach Anspruch 2, bei der der zweite Analogmultiplexer (51b) Einrichtungen für das abwechselnde Wählen von zwei Signalen aus den R (Rot), G (Grün) und B (Blau) Signalen für einen einzelnen Bildpunkt enthält und für das Wählen des übrigbleibenden der R-, G- und B- Signale für einen anderen einzelnen Bildpunkt.

9. Eine Vorrichtung nach Anspruch 2, dadurch gekennzeichnet, daß der erste Aanalogmultiplexer (51a) dazu eingerichtet ist, um abwechselnd die Wahl von zwei aus den R- (Rot), G- (Grün) und B- (Blau) Signalen für einen einzelnen Bildpunkt zu treffen und die Wahl eines der R-, G- und B- Signale für einen einzelnen Bildpunkt auszuführen, und der zweite Analogmultiplexer (51b) dazu eingerichtet ist, abwechselnd die Wahl von zwei aus den R- (Rot), G- (Grün) und B- (Blau) Signalen für einen einzelnen Bildpunkt zu treffen und die Auswahl aus einem der R-, G-, und B- Signale für einen einzelnen Bildpunkt zu treffen, der erste Analogmultiplexer (51a) wählt zwei der R-, G- und B- Signale für einen einzelnen Bildpunkt, während der zweite Analogmultiplexer (51b) eines der übrigbleibenden R-, G- und B- Signale für einen einzelnen Bildpunkt wählt, und der erste Analogmultiplexer (51a) wählt eines der R-, G- und B- Signale für einen einzelnen Bildpunkt, während der zweite Analogmultiplexer (51b) die zwei übrigbleibenden R, G und B Signale für einen einzelnen Bildpunkt wählt.

10. Eine Vorrichtung nach Anspruch 2, bei der der erste A/D-Wandler (31a; 52a) abwechselnd A/D-Wandlungen von zwei der R- (Rot), G- (Grün) und B- (Blau) Signale für einen einzelnen Bildpunkt ausführt, und A/D-Wandlungen für das übrigbleibende R- G- und B- Signal für einen einzelnen Bildpunkt ausführt.

11. Eine Vorrichtung nach Anspruch 2, in der der genannte A/D-Wandler (31b; 52b) abwechselnd A/D-Wandlungen von zwei der R- (Rot), G- (Grün) und B- (Blau) Signale für einen einzelnen Bildpunkt aus führt, und A/D-Wandlungen eines der übrigbleibenden R-, G- und B- Signale für einen einzelnen Bildpunkt ausführt.

12. Eine Vorrichtung nach Anspruch 2, bei der der erste A/D-Wandler (31a, 52a) dazu eingerichtet ist, abwechselnd A/D-Wandlungen von zwei der R- (Rot), G- (Grün) und B- (Blau) Signale für einen einzelnen Bildpunkt auszuführen, und A/D-Wandlungen eines der übrigbleibenden R-, G- und B- Signale für den einzelnen Bildpunkt ausführen, der zweite A/D-Wandler (31b, 52b) ist dazu eingerichtet ist, abwechselnd A/D-Wandlungen von zwei der R- (Rot), G- (Grün) und B- (Blau) Signale für einen einzelnen Bildpunkt auszuführen, und A/D-Wandlungen eines der übrigbleibenden R-, G- und B- Signale für den einzelnen Bildpunkt auszuführen, der erste A/D-Wandler (31a, 52a) zwei der R-, G- und B- Signale für einen einzelnen Bildpunkt A/D wandelt, während der zweite A/D-Wandler (31b, 52b) das übrigbleibende der R-, G- und B- Signale für den einzelnen Bildpunkt A/D-wandelt, und der erste A/D-Wandler (31a, 52a) eines der R-, G- und B- Signale für einen einzelnen Bildpunkt A/D-wandelt, während der zweite A/D-Wandler (31b, 52b) die übrigbleibenden zwei R-, G- und B- Signale für den einzelnen Bildpunkt A/D-wandelt.

F I G. 1

F I G. 2

F I G. 3

F I G. 4

F I G. 5

F I G.  6

F I G. 7

F I G. 8

F I G. 9A    Y

F I G. 9B    Ø1

F I G. 9C    Ø2

F I G. 9D    Øn1

F I G. 9E    Øn2

F I G. 9F    Dout

F I G. 9G    STI

F I G. 9H    C1

F I G. 9I    C2

F I G. 9J    Øf "1"

F I G. 9K    Øc

EP 0 264 918 B1

FIG. 10A  ∅1

FIG. 10B  ∅2

FIG. 10C  D11 ⌇ D14

S2  S4  S6  S8  S10  S12  S14  S16

FIG. 10D  D21 ⌇ D24

S1  S3  S5  S7  S9  S11  S13  S15  S17

```
          ┌─────────┐      ╓──────╖
          │  AUDIO  │─45   ║      ║46
          │ CIRCUIT │      ╙──────╜
          └─────────┘
 ▽ 41           │
          ┌───────┐   ┌─────────┐  Y  ┌─────────┐ →R
 ────────►│ TUNER │──►│   TV    │────►│ CHROMA  │ →G
          │  42   │   │ LINEAR  │  C  │ CIRCUIT │
          └───────┘   │ CIRCUIT │────►│   44    │ →B
                      │   43    │     └─────────┘
                      └─────────┘
                           │
                        C-sync
```

FIG. 11

F I G. 12

F I G. 13

F I G. 15

F I G. 14

F I G. 16A    R    WHITE LEVEL ————————————————————

                 BLACK LEVEL – – –

F I G. 16B    G    WHITE LEVEL ————————————————————

                 BLACK LEVEL – – –

F I G. 16C    B    WHITE LEVEL – – –

                 BLACK LEVEL ————————————————————

F I G. 16D    ø1

F I G. 16E    ø2

EP 0 264 918 B1

FIG. 16F AN1

FIG. 16G AN2

FIG. 16H AN3

FIG. 16I AN4

FIG. 16J AN5

FIG. 16K AN6

FIG. 16L AD1

G1 R2 B2 G3 R4 B4 G5 R6 B6 G7 R8 B8 G9 R10 B10

WHITE LEVEL

BLACK LEVEL

FIG. 16M AD2

R1 B1 G2 R3 B3 G4 R5 B5 G6 R7 B7 G8 R9 B9 G10

WHITE LEVEL

BLACK LEVEL